# EUROPEAN PATENT SPECIFICATION

(11) **EP 2 709 015 B1**
(45) Date of publication and mention of the grant of the patent: **21.08.2019**
(21) Application number: 13182000.3
(22) Date of filing: 28.08.2013
(51) Int. Cl.: G06F 11/263, G06F 11/22

(54) **Logic circuit and control apparatus using the same**
Logische Schaltung und Steuerungsvorrichtung damit
Circuit logique et appareil de commande l'utilisant

(30) Priority: 12.09.2012 JP 2012200065
(43) Date of publication of application: 19.03.2014
(73) Proprietor: Hitachi, Ltd., Tokyo 100-8280 (JP)
(72) Inventor: Kanekawa, Nobuyasu, Tokyo, 100-8280 (JP); Katsuta, Keiichi, Tokyo, 100-8280 (JP); Sakata, Teruaki, Tokyo, 100-8280 (JP); Ikeda, Naohiro, Tokyo, 100-8280 (JP); Kurihara, Naoki, Tokyo, 100-8280 (JP); Shimamura, Kotaro, Tokyo, 100-8280 (JP)
(74) Representative: Mewburn Ellis LLP

(56) References cited:
- GB-A- 2 219 865
- US-A- 6 092 217

## Description

### BACKGROUND

The present invention relates to a logic circuit and in particular to a logic circuit having an error detection function.

To detect an abnormal operation of a processor, such as a failure or malfunction, there has been used a method of making a processor redundant and performing a comparison between outputs of the redundant processors. One major factor that may make this method ineffective is a failure of a circuit for performing a comparison between outputs (comparator). To eliminate such a detrimental factor, a method for injecting a test pattern to the comparator has been proposed. For example, Japanese Patent Application Laid-open No. Hei(1995)7-234801 discloses a method for injecting an orthogonal waveform (function) as a test pattern so that a failure of the comparator can be effectively detected.

The performance of processors has been improved according to Moore ' s Law year after year. The operating frequency or clock frequency of processors has been improved accordingly. To address the speedup of processors, Japanese Patent Application Laid-open No. Hei(1995)7-234801 also discloses a method for implementing redundant processors and a comparator on a single chip.

US6092217 discloses a self-checking circuit, which includes a logic circuit having an error detection function. For function blocks for feeding out a plurality of signals that are at least duplexed, the logic circuit compares the output signals of the function blocks, and detects an error on the basis of results of the comparison. The logic circuit comprises synthesizing means provided to superimpose inherent waveforms assigned in advance to the respective output signals of the function blocks onto the output signals of one of the function blocks. The inherent waveforms are orthogonal waveforms generated by an orthogonal waveform generator circuit. The logic circuit also comprises comparison means for comparing a signal output of the synthesizing means with the signal output of the other function block to detect an error. The whole circuit including the function blocks are judged normal only if the waveforms inherent to both output signals exist.

### SUMMARY

For an embodiment of the above related art in which a test pattern injecting means is included in each processor, further consideration must be given to the variation in operation delay between the test pattern injecting means during high-speed operation of the processors.

If the operation of a processor is speeded up in future and if redundant processors and a comparator are implemented on a single chip, delay of a clock signal on the chip and variation in the delay between the processors would cause variations in operation delay between the redundant processors as well as between the test pattern injecting means associated with the processors. That is, a rapid operation of a processor causes a rapid operation of a comparator. Accordingly, if the processors produce an output at different timings, the comparator could not perform normal processing.

A purpose of the present invention is to reduce the variation in operation delay between the test pattern injecting means.

Further, as the speed of processors is increased day to day, month to month, new processors appear in the market one after another at short intervals. Accordingly, the use of the approach of implementing redundant processors and a comparator on a single chip described above would not allow the benefits of the latest processor technology to be enjoyed. If the present invention provides a method for reducing the variation in operation delay between the respective test pattern injecting means of the processors during high speed operation, there would be no need to implement redundant processors and a comparator on a single chip. This would allow the use of the state-of-the-art processors capable of high speed operation.

According to the present invention, there is provided a logic circuit according to claim 1. According to the present invention there is also provided a control apparatus according to claim 9.

Specifically, the test pattern injecting means is synchronized to the data output cycle of the function blocks, which can be longer than the operation clock. Thus, the variation in signal delay (skew) can be reduced.

According to the present invention, it is possible to reduce the variation in signal delay between the respective test pattern injecting means of the processors.

### BRIEF DESCRIPTION OF THE DRAWINGS

Fig. 1 is a diagram showing a functional configuration according to one embodiment of the present invention;
Fig. 2 is a diagram showing detailed layout according to the embodiment of the present invention;
FIG. 3 is a diagram showing one embodiment of the synchronizing means;
Fig. 4 is a diagram showing the input-output relationship of a C element;
Fig. 5 is a diagram showing another embodiment of the input-output relationship of the C element;
Fig. 6 is a diagram showing an operation time chart according to one embodiment;
Fig. 7 is a diagram showing a functional configuration according to an embodiment in which a test pattern is incremented using a data increment signal;
Fig. 8 is a diagram showing a functional configuration according to an embodiment in which the synchronizing means is made redundant;
FIG. 9 is a diagram showing the transition of test patterns on a step-by-step basis;
FIG. 10 is a diagram showing another example of the transition of test patterns on a step-by-step basis;
FIG. 11 is a diagram showing an embodiment in which an argument x and a test pattern are associated with each other;
FIG. 12 is a diagram showing another embodiment in which an argument x and a test pattern are associated with each other;
FIG. 13 is a diagram showing the output order of the argument x for performing a method for injecting the test patterns of FIG. 10 using the assignment of FIG. 11;
FIG. 14 is a diagram showing the output order of the argument x for performing a method for injecting the test patterns of FIG. 9 using the assignment of FIG. 11;
FIG. 15 is a diagram showing the output order of the argument x for performing a method for injecting the test patterns of FIG. 9 using the assignment of FIG. 12;
FIG. 16 is a diagram showing the output order of the argument x for performing a method for injecting the test patterns of FIG. 10 using the assignment of FIG. 12;
FIG. 17 is a diagram showing a functional configuration according to an embodiment in which orthogonal waveform generation circuits are combined with counters, respectively; and
FIG. 18 is a diagram showing a functional configuration of a control apparatus to which the present invention is applied.

### DETAILED DESCRIPTION

Now, embodiments of the present invention will be described with reference to the accompanying drawings.

### First Embodiment

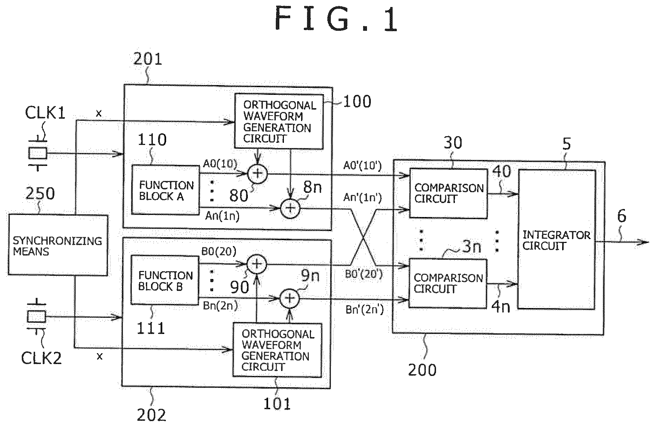

FIG. 1 is a diagram showing a functional configuration of a basic embodiment of the present invention. A region 0 (200) includes comparison circuits 30 to 3n and an integrator circuit 5. The integrator circuit 5 combines outputs 40 to 4n from the comparison circuits 30 to 3n into an output 6. A region 1 (201) includes an orthogonal waveform generation circuit (test pattern generation circuit) 100, a function block A (110), and test pattern injecting circuits (permuters) 80 to 8n. Similarly, a region 2 (202) includes an orthogonal waveform generation circuit (test pattern generation circuit) 101, a function block B (111), and test pattern injecting circuits (permuters) 90 to 9n. In the region 1, the function block A (110) outputs a bit string (A0 to An) as a processing result, and the orthogonal waveform generation circuit (test pattern generation circuit) 100 injects an error into each bit outputted by the function block A (110) . Similarly, in the region 2, the function block B (111) outputs a bit string (B0 to Bn) as a processing result, and the orthogonal waveform generation circuit (test pattern generation circuit) 101 injects an error into each bit outputted by the function block B (111).

The regions 0 (200), 1 (201), and 2 (202) are laid out on a single chip in a manner to be spaced from each other, or disposed on different chips. As shown in FIG. 1, the region 1 (201) and the region 2 (202) receive clock signals from different clock sources, CLK1 and CLK2, respectively. Alternatively, the regions 1 and 2 include different multiplier circuits operating based on the same clock source and receive clock signals generated by the respective multiplier circuits. Each multiplier circuit may be, for example, a phase-locked loop (PLL) . In the present embodiment, a synchronizing means 250 is further provided. The synchronizing means 250 synchronizes the orthogonal waveform generation circuit (test pattern generation circuit) 100 in the region 1 and the orthogonal waveform generation circuit (test pattern generation circuit) 101 in the region 2 to generate test patterns which are consistent as a whole.

In this case, the synchronizing means 250 need not necessarily synchronize the orthogonal waveform generation circuits 100 and 101 to the operation clock, but may perform synchronization in accordance with the output timing of the function blocks A (110) and B (111), which has a longer cycle than the operation clock. By synchronizing the test pattern generation circuits to the output timing of the function blocks A (110) and B (111), it is possible to reduce the effect of the signal propagation delay caused by the distance between the test pattern generation circuits, or the variation of the signal propagation delay (skew). Also, information necessary for synchronization may be exchanged either through a dedicated line or by transmitting the information in the form of data over a data bus.

Further, microprocessors are often used as the function blocks A (110) and B (111) in recent years.

According to the present embodiment, even when the operation frequency of the function blocks A (110) and B (111) is increased and thus the signal propagation delay caused by the distance between the function blocks or the variation of the signal propagation delay (skew) cannot be ignored, the synchronizing means 250 can synchronize the orthogonal waveform generation circuits (test pattern generation circuits) 100 and 101 to the output of messages from the function blocks. Thus, it is possible to enjoy the benefits of the latest processor technology. Further, even when the region 1 (201) having the processor, that is, the function block A (110) implemented thereon and the region 2 (202) having the processor, that is, the function block B (111) implemented thereon are disposed on a chip different from the chip on which the region 0 (200) having the comparison circuits 30 to 3n implemented thereon is disposed and when the signal propagation delay caused by the distance between the function blocks or the variation in the signal propagation delay (skew) cannot be ignored, the synchronizing means 250 according to the present embodiment can synchronize the orthogonal waveform generation circuits (test pattern generation circuits) 100 and 101. Thus, it is possible to easily replace the function blocks A (110) and B (111) with the latest processors and thus enjoy the benefits of the latest processor technology.

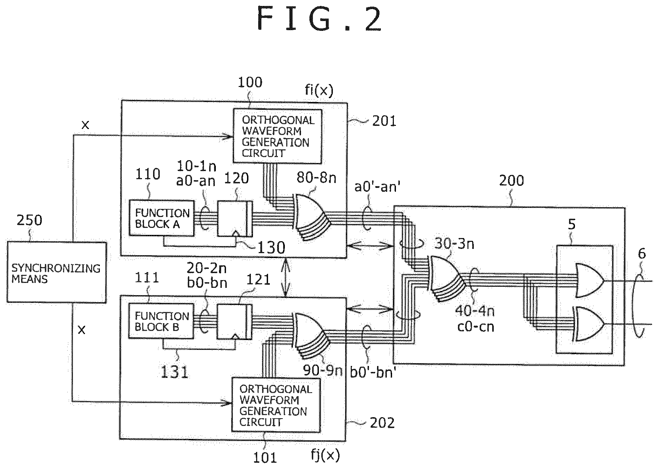

FIG. 2 is a layout diagram detailing the functional configuration shown in FIG. 1. Signals a0 to an (10 to In; the numerical subscript denotes the bit position) from the function block A (110) are latched by a latch 120 in accordance with a strobe signal 130, and exclusive ORs of the signals a0 to an (10 to 1n) and orthogonal waveforms from the orthogonal waveform generation circuit (test pattern generation circuit) 100 are obtained by permuters 80 to 8n in the form of a0' to an' (10' to 1n'; the numerical subscript denotes the bit position). Similarly, signals b0 to bn (20 to 2n) from the function block B (111) are latched by a latch 121 in accordance with a strobe signal 131, and exclusive ORs of the signals b0 to bn (20 to 2n) and orthogonal waveforms from the orthogonal waveform generation circuit 101 are obtained by permuters 90 to 9n in the form of b0' to bn' (20' to 2n'). The signals a0' to an' (10' to 1n') and b0' to bn' (20' to 2n') thus generated are compared by the comparison circuits 30 to 3n. Comparison results c0 to cn (40 to 4n) generated by the comparison circuits 30 to 3n are combined into the signature output 6 by the integrator circuit 5.

Meanwhile, the comparison circuits 30 to 3n and the integrator circuit 5 are grouped into the region 0 (200); the function block A (110), the latch 120, the orthogonal waveform generation circuit 100, and the permuters 80 to 8n are grouped into the region 1 (201); and the function block B (111), the latch 121, the orthogonal waveform generation circuit 101, and the permuters 90 to 9n are grouped into the region 2 (202). The region 0 (200), the region 1 (201), and the region 2 (202) are implemented either on separate chips or on a single chip. When these regions are implemented on a single chip, interference can be prevented either by laying out these regions in a manner to be spaced from each other or grounding the regions separately.

The synchronizing means 250 passes information for generating orthogonal waveforms (e.g., an argument x) to the orthogonal waveform generation circuit 100 in the region 1 (201) and the orthogonal waveform generation circuit 101 in the region 2 (202) . Based on the information, the orthogonal waveform generation circuits 100 and 101 generate orthogonal waveforms. For example, if the information for generating orthogonal waveforms is the argument x, the orthogonal waveform generation circuits 100 and 101 generate orthogonal waveforms fi(x) and fj(x), respectively.

According to the layout of the present embodiment, geometrical, physical, or electrical isolation can be provided between the correlated signals, that is, between ai and bi and between pi and ci. Accordingly, the occurrence of a false signature caused by fault contact can be prevented.

In the design of a high-performance LSI, it is generally efficient to make a rough layout (floor plan) using a heuristic approach based on human experience or intuition, and make detailed wiring automatically in accordance with a given algorithm. For this reason, many of existing automatic wiring tools have functions that allow a human to input a rough layout (floor plan) and that automatically make detailed wiring after inputting the rough layout. The method according to the present embodiment is compatible with such functions of existing automatic wiring tools and can make the most use thereof.

According to the present embodiment, self-check can be easily performed by only copying a function block made by a typical logic design logically or optically and then combining the function blocks with the region 0 (200) including the comparison circuits 30 to 3n and the integrator circuit 5. Thus, it is possible to increase reliability, as well as significantly reduce the cost and man-hours for development.

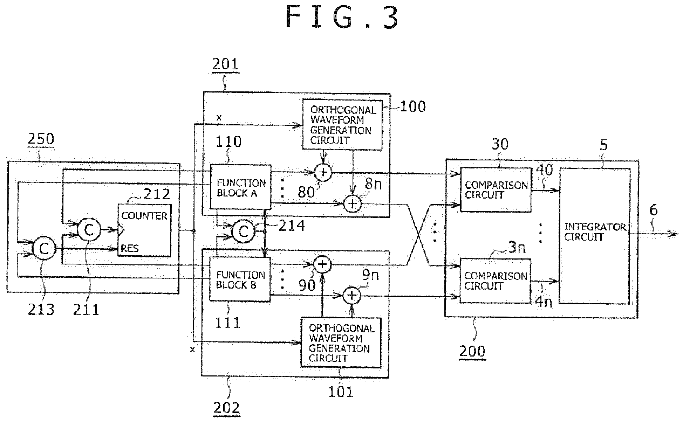

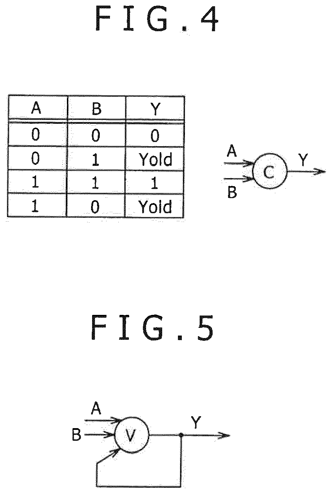

FIG. 3 is a diagram showing one embodiment of the synchronizing means 250. As shown in FIG. 3, the synchronizing means 250 includes C elements 211 and 213 and a counter 212. The C element 211 has an input-output relationship as shown in FIG. 4. The C element 211 is a sequential circuit that produces a high output Y when both inputs A and B are high; produces a low output Y when both the inputs A and B are low; and continuously outputs the previous output signal when the inputs A and B are different. Alternatively, the C element 211 may be a majority circuit (V) as shown in FIG. 5.

The C element 211 receives orthogonal waveform increment signals from both the function block A (110) and the function block B (111) and then generates a signal for incrementing the counter 212 for generating an argument x (clock signal). The C element 213 receives reset signals from both the function block A (110) and the function block B (111) and then resets the counter 212 for generating an argument x.

A C element 214 receives data increment signals from both the function block A (110) and the function block B (111) and then synchronizes the timing for outputting next data (message including multiple bit strings).

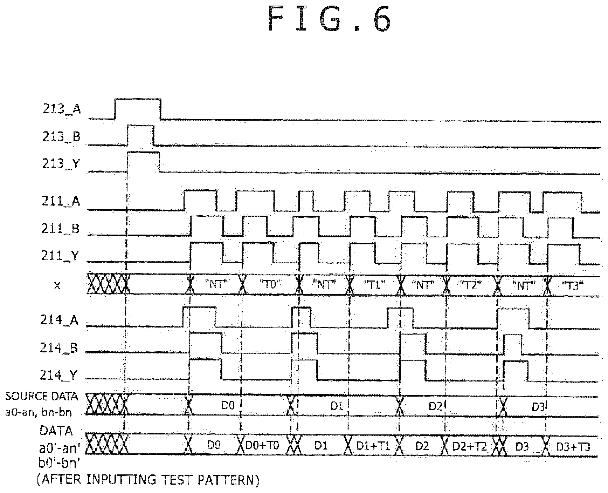

FIG. 6 is a time chart showing the operation of the present embodiment. First, prior to the operation, the C element 213 receives a reset signal 213_A (which indicates an input A of the C element 213) and a reset signal 213_B (which indicates an input B thereof) and then outputs a signal 213_Y (which indicates an output Y thereof), thereby initializing the counter 212 for generating an argument x.

Subsequently, the C element 211 receives orthogonal waveform increment signals 211_A and 211_B from the function blocks A (110) and B (111), respectively, and then outputs a signal 211_Y, thereby incrementing the counter 212 for generating an argument x. As a result, as shown in FIG. 6, the counter 212 alternately outputs an argument x indicating the state that a test pattern is not injected (hereinafter called "test pattern non-injecting state") (NT) and an argument x indicating the state that a test pattern is injected (hereinafter called "test pattern injecting state") (Ti; i represents the test pattern number) . When the orthogonal waveform generation circuits 100 and 101 receive an argument x indicating a test pattern injecting state (Ti; i represents the test pattern number), they output a test pattern corresponding to i (the test pattern number); when they receive an argument x indicating a test pattern non-injecting state (NT), they output no test pattern.

The C element 214 receives data increment signals 214_A and 214_B from the function blocks A (110) and (111), respectively, and then outputs a signal 214_Y. Based on the signal 214_Y, the function blocks A (110) and B (111) output pieces of source data a0 to an (10 to 1n) and b0 to bn (20 to 2n), respectively, as shown in FIG. 6. Note that the pieces of source data a0 to an (10 to 1n) and b0 to bn (20 to 2n), which are composed of multiple bits, over a certain period in the diagram are collectively referred to as Di (where i represents the sequence number of data (message)). The sequence number i of data (message) is incremented based on the outputted data increment signal 214_Y.

After the above operation, the pieces of source data a0 to an (10 to 1n) and b0 to bn (20 to 2n) are exclusive ORed with the test patterns generated by the orthogonal waveform generation circuits 100 and 101 by the permuters 80 to 8n and 90 to 9n, respectively. As a result, pieces of data a0' to an' (10' to 1n') and b0' to bn' (20' to 2n') are generated. Note that, in FIG. 6, data generated by injecting a test pattern Tj to source data Di is denoted as Di+Tj.

A test pattern non-injecting state (NT) and a test pattern injecting state (Ti; i represents the test pattern number) are repeated with respect to one piece of data (message) for the following two purposes. A first purpose is to check the agreement between data without injecting test patterns, as well as to check the normality of the subsequent comparison circuit by injecting test patterns. A second purpose is to alternately repeat the agreement between data (test pattern non-injecting state) and the disagreement between data (test pattern injecting state) in the subsequent comparison circuit to generate an alternating signal.

As described with reference to FIG. 6, each time the function blocks 110 and 111 output one sequence of data (message), the orthogonal waveform generation circuits 100 and 101 can simultaneously receive information (argument x) that serves as a test pattern output trigger. Accordingly, the orthogonal waveform generation circuits 100 and 101 can simultaneously inject a test pattern each time the function blocks 110 and 111 output a message.

### Second Embodiment

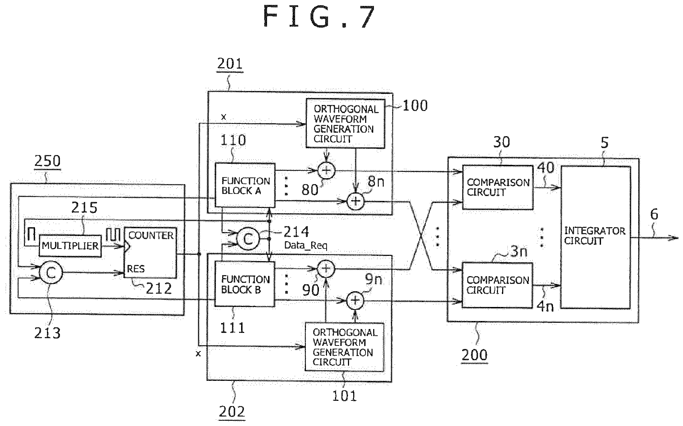

FIG. 7 shows an embodiment in which the C element 214 receives data increment signals 214_A and 214_B from the function blocks A (110) and B (111), respectively, and then produces an output, which is then inputted to the clock of the counter 212 for generating an argument x, via a multiplier circuit 215. The multiplier circuit 215 is a circuit that when receiving one input pulse, outputs two pulses at a predetermined interval. The multiplier circuit 215 may be a timer or the like. According to the present embodiment, when the function blocks A (110) and B (111) output data increment signals, the counter 212 for generating an argument x can be incremented twice at the predetermined interval. Accordingly, it is possible to generate and inject two test patterns with a time difference with respect to one piece of data (one data increment signal). As a result, it is possible to repeat a test pattern non-injecting state (NT) and a test pattern injecting state (Ti; i represents the test pattern number) with respect to one piece of data.

### Third Embodiment

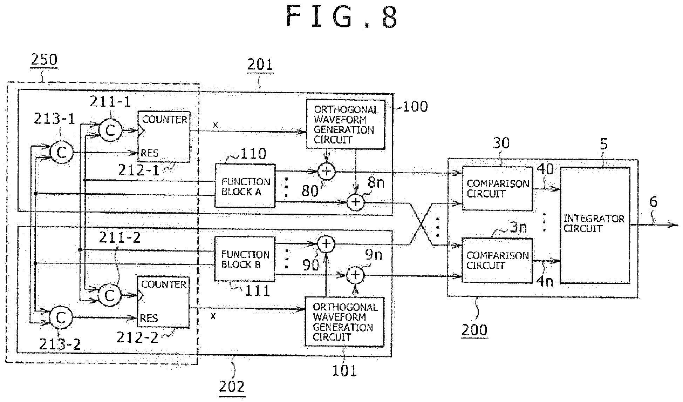

FIG. 8 is a diagram showing a functional configuration of an embodiment in which the synchronizing means 250 is made redundant and thus distributed to the region 1 (201) and the region 2 (202). The C elements 211 and 213 and the counter 212 included in the synchronizing means 250 are made redundant in the form of C elements 211-1 and 213-1 and a counter 212-1 in the region 1 (201) and C elements 211-2 and 213-2 and a counter 212-2 in the region 2 (202). According to the present embodiment, when an abnormality occurs in one of the C elements 211-1, 211-2, 213-1, and 213-2 and the counters 212-1 and 212-2, the effect of the abnormality is confined within one of the region 1 (201) and the region 2 (202) without extending to the other region. For this reason, the output timing of the argument x to the orthogonal waveform generation circuit varies between the regions 1 and 2. This results in different outputs, which can be then detected as an error in the comparison circuit.

### Fourth Embodiment

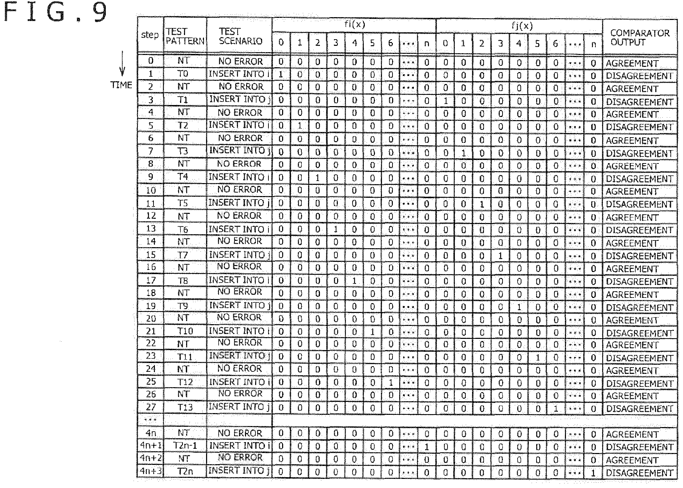

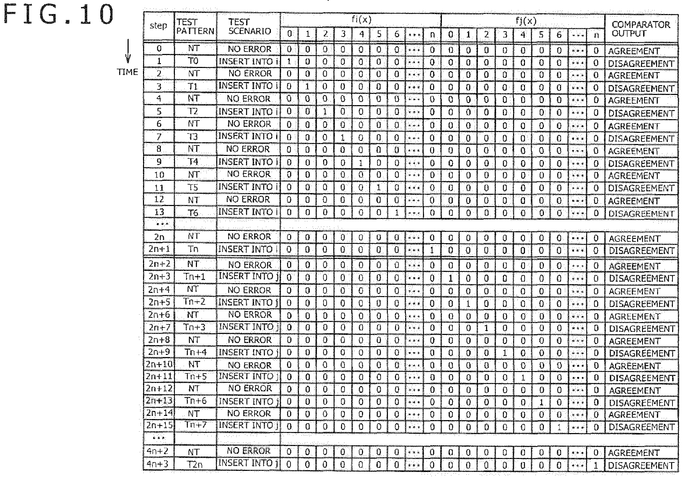

FIGS. 9 and 10 are diagrams showing the transition between test patterns on a step-by-step basis. In the diagrams, steps arranged from top to bottom represent times; NT in the test pattern field represents a test pattern non-injecting state; and Ti (where i represents the test pattern number) therein represents a test pattern injecting state and the test pattern number. fi(x) and fj(x) represent test patterns; the numbers directly below fi(x) and fj (x) represent bit positions to which an error may be injected, of a test pattern; and a bit position in which 1 is set indicates that an error is injected in that bit position. For example, the fact that 1 is set in the k-th bit position of a test pattern fi (x) means that the test pattern is a test pattern for inverting ak (1k); the fact that 1 is set in the k-th bit position of a test pattern fj(x) means that the test pattern is a test pattern for inverting bk(2k). These test patterns are injected to the pieces of source data a0 to an (10 to 1n) and b0 to bn (20 to 2n) by the permuters 80 to 8n and 90 to 9n (exclusive ORs), thereby obtaining pieces of data a0' to an' (10' to 1n') and b0' to bn' (20' to 2n').

FIG. 9 shows an embodiment in which test patterns are alternately injected to a0 to an (10 to 1n) outputted from the function block A (110) and to b0 to bn (20 to 2n) outputted from the function block B (111) on bit-by-bit basis.

FIG. 10 shows an embodiment in which test patterns are first injected to a0 to an (10 to 1n) outputted from the function block A (110) on a bit-by-bit basis and then test patterns are injected to b0 to bn (20 to 2n) outputted from the function block B (111) on a bit-by-bit basis.

### Fifth Embodiment

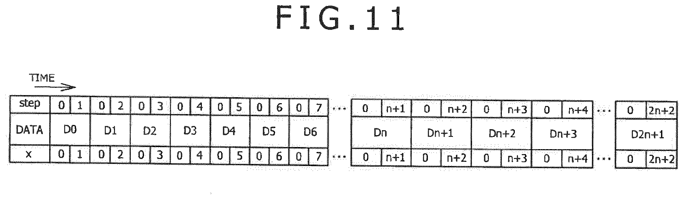

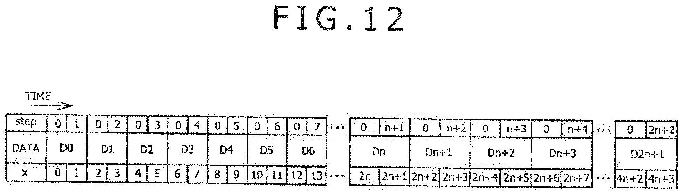

FIGS. 11 and 12 are diagrams showing an embodiment of association between an argument x and a test pattern. In the diagrams, steps arranged from left to right represent times, and data Di and an argument x to a test pattern are shown in a manner to be associated with each other.

FIG. 11 shows an embodiment in which x=0 is assigned to a test pattern non-injecting state (NT) and x=i is assigned to a test pattern injecting state (Ti; i represents the test pattern number).

FIG. 12 shows an embodiment in which a series of arguments x are assigned to a test pattern non-injecting state (NT) and a test pattern injecting state (Ti; i represents the test pattern number) which are alternately repeated, without distinguishing NT and Ti from each other.

In any embodiment, a test pattern non-injecting state (NT) and a test pattern injecting state (Ti; i represents the test pattern number) are alternately repeated for each data Di.

The embodiment shown in FIG. 12 is simple, because the argument x only has to be increased monotonously and therefore the counter 212 may be a simple binary counter. The embodiment shown in FIG. 11, on the other hand, is somewhat complicated, because the counter 212 must be a combination of a binary counter and a decoder.

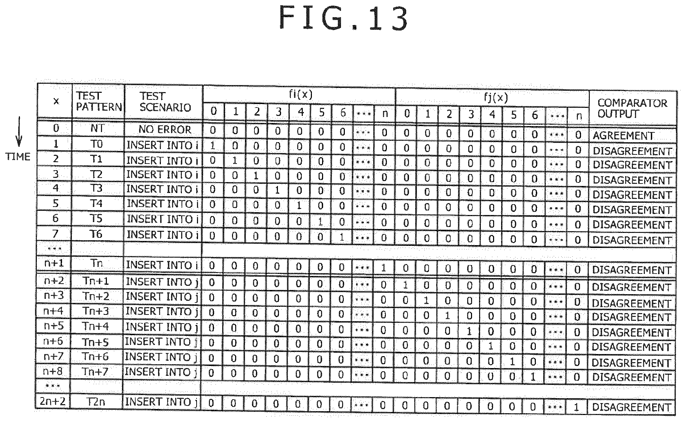

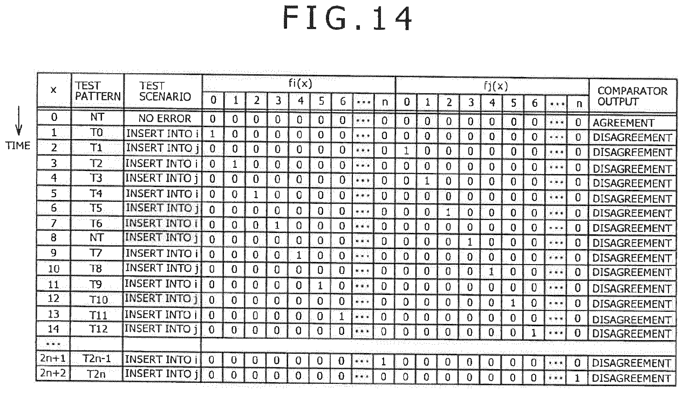

FIG. 13 is a diagram showing the output order of arguments x for performing the test pattern injecting method shown in FIG. 10 using the assignment shown in FIG. 11. FIG. 14 is a diagram showing the output order of arguments x for performing the test pattern injecting method shown in FIG. 9 using the assignment shown in FIG. 11.

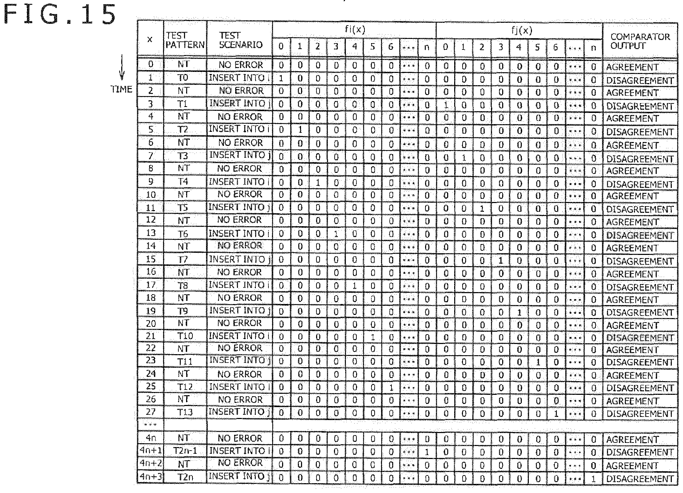

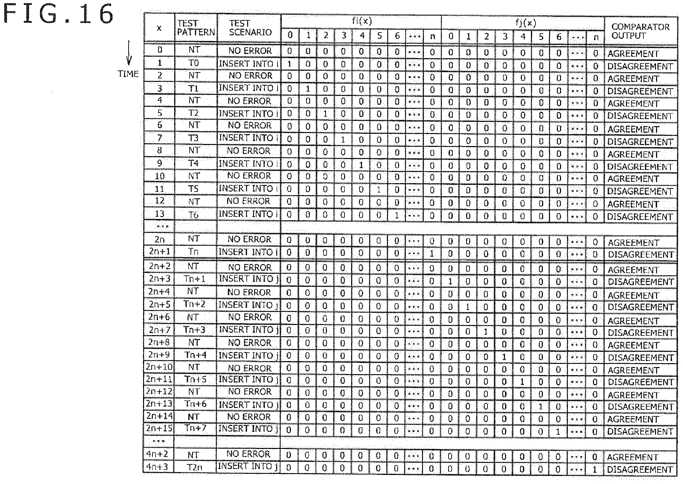

FIG. 15 shows an embodiment of the output order of arguments x for performing the test pattern injecting method shown in FIG. 9 using the assignment shown in FIG. 12; FIG. 16 shows an embodiment of the output order of arguments x for performing the test pattern injecting method shown in FIG. 10 using the assignment shown in FIG. 12.

### Sixth Embodiment

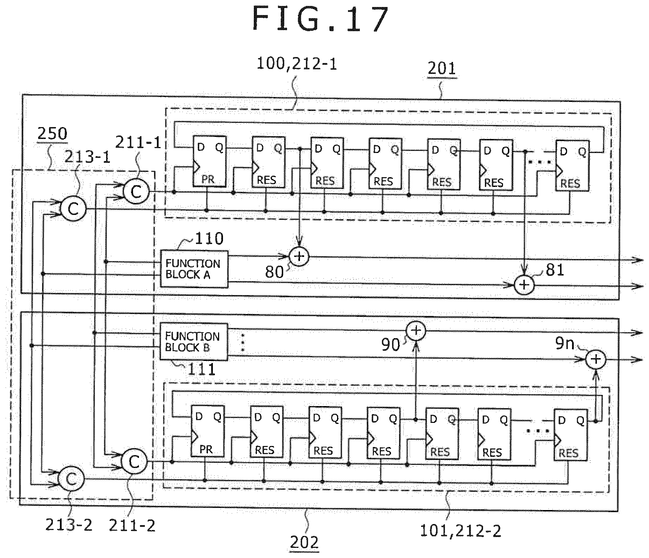

FIG. 17 shows an embodiment formed by combining the orthogonal waveform generation circuit 100 and the counter 212-1 and combining the orthogonal waveform generation circuit 101 and the counter 212-2. The C elements 213-1 and 213-2 receive reset signals from the function blocks A (110) and B (111), respectively, and then produce outputs. Thus, the most left flip-flops included in the orthogonal waveform generation circuits 100 and 101 are preset (1 is set as an initial value), and the other flip-flops are reset (0 is set as an initial value). Specifically, values 1, 0, 0, 0, 0, ... and 0 are set to the flip-flop strings included in the orthogonal waveform generation circuits 100 and 101. After the reset, the C element 211-1 and 211-2 receive orthogonal waveform increment signals from the function blocks A (110) and B (111) and then produce outputs. In accordance with the outputs, patterns 1, 0, 0, 0, 0, ... and 0 are shifted in turn, thereby forming test patterns shown in FIG. 13. Note that by changing the portion from which a test pattern is extracted, of the flip-flop string, test patterns shown in FIG. 12 can be generated.

### Seventh Embodiment

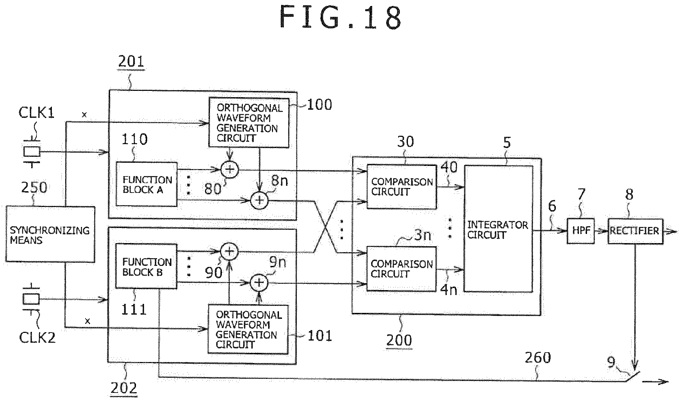

FIG. 18 is a diagram showing a functional configuration of a control apparatus to which the present invention is applied. The output of the integrator circuit 5 is inputted to an amplifier 7 having a high-pass filter or high-pass characteristics, and the output of the amplifier 7 is rectified by a rectifier circuit 8 and then activates the winding of a relay 9. The contact of the relay 9 is used to connect or disconnect an output 260 of one of the function blocks A (110) and B (111) (in the drawing, the function block B (111)) and an external apparatus to be controlled. When the function blocks A (110) and B (111), the orthogonal waveform generation circuits 100 and 101, the comparison circuits 30 to 3n, and the integrator circuit 5 are all normal, an alternating signal appears as the output 6 of the integrator circuit 5. The alternating signal then passes through the amplifier 7 having a high-pass filter or high-pass characteristics, becomes a direct current in the rectifier circuit 8, and activates the winding of the relay 9. Thus, the contact of the relay 9 is activated, producing the output 260 from one of the function blocks A (110) and B (111) . When an abnormality occurs in one of the function blocks A (110) and B (111), the orthogonal waveform generation circuits 100 and 101, the comparison circuits 30 to 3n, and the integrator circuit 5, the alternating signal, which is the output 6 from the integrator circuit 5, stops. Accordingly, the amplifier 7 having a high-pass filter or high-pass characteristics fails to produce an output, and the rectifier circuit 8 fails to obtain a direct current. This prevents the activation of the winding of the relay 9. Thus, the contact of the relay 9 is deactivated, so that the output 260 from one of the function blocks A (110) and B (111) is blocked by the relay 9.

As described above, according to the present embodiment, when an abnormality occurs in the function blocks A (110) and B (111), the output 260 can be reliably stopped by the relay 9, ensuring safety.

Further, by shutting down the apparatus to be controlled, using the contact of the relay 9, dangerous operation of the apparatus to be controlled can be prevented, ensuring safety.

## Claims

1. A logic circuit comprising:
a plurality of function blocks (110, 111) forming a redundant system and configured to output pieces of data, each piece of data including a bit string;
a plurality of test pattern generation circuits (100, 101) configured to combine test patterns for abnormality detection with the pieces of data outputted from the function blocks (110, 111); and
a comparison circuit (30 - 3n) configured to make a comparison between the pieces of data combined with the test patterns,
**characterized in that**:
the logic circuit further comprises synchronizing means, wherein:
the synchronizing means comprises an element (214) arranged to receive data increment signals (214A, 214B) from each of the plurality of function blocks (110, 111) respectively, and then to output a signal (214Y) to synchronize the timing for outputting the next data by the plurality of function blocks (110, 111);
the synchronizing means further comprises a further element (211) and a counter (212), wherein the further element (211) is arranged to receive orthogonal waveform increment signals (211A, 211B) from the plurality of function blocks (110, 111), respectively, and to then output a signal (211Y) that increments the counter (212) for generating an argument x, whereby the counter (212) alternately outputs to the plurality of test pattern generation circuits (100, 101) an argument x indicating the state that a test pattern is to be combined with the pieces of data outputted from the function blocks (110, 111) and an argument x indicating the state that a test pattern is not to be combined with the pieces of data outputted from the function blocks (110, 111).

2. The logic circuit according to claim 1, wherein clock signals from different clock sources (CLK1, CLK2) are provided to each function block (110, 111) and the corresponding test pattern generation circuit (100, 101) respectively.

3. The logic circuit according to claim 2, wherein the different clock sources (CLK1, CLK2) are different oscillation circuits.

4. The logic circuit according to claim 2, wherein the different clock sources (CLK1, CLK2) are different clock multiplier circuits.

5. The logic circuit according to any one of the previous claims,
wherein each of said plurality of the function blocks (110, 111) is composed of a microprocessor respectively.

6. The logic circuit according to any one of the previous claims,
wherein the test patterns are orthogonal waveforms.

7. The logic circuit according to any one of the previous claims,
wherein regions including each function block (110, 111) and the corresponding test pattern generation circuit (100, 101) are spaced from a region including the comparison circuit (30 - 3n).

8. The logic circuit according to any one of the previous claims,
wherein regions including each function block (110, 111) and the corresponding test pattern generation circuit (100, 101) are formed on a different semiconductor chip from a semiconductor chip on which a region including the comparison circuit (30 - 3n) is formed.

9. A control apparatus comprising:
a logic circuit according to any of claims 1 to 8;
an amplifier (7) having a high-pass filter or high-pass characteristics;
a rectifier circuit (8); and
a relay (9),
wherein an output of the comparison circuit (30 - 3n) is inputted to the amplifier (7),
wherein the relay (9) is activated using an output obtained by rectifying an output of the amplifier (7) using the rectifier circuit (8), and
wherein by using the relay (9), an output of the function blocks (110, 111) is connected to or disconnected from an external apparatus to be controlled.

## Patentansprüche

1. Logikschaltung, umfassend:
eine Vielzahl von Funktionsblöcken (110, 111), die ein redundantes System bilden und zum Ausgeben von Datenfragmenten konfiguriert sind, wobei jedes Datenfragment eine Bitfolge umfasst;
eine Vielzahl von Testmustererzeugungsschaltungen (100, 101), die konfiguriert sind, Testmuster zur Abnormitätsdetektion mit den von den Funktionsblöcken (110, 111) ausgegebenen Datenfragmenten zu kombinieren; und
eine Vergleichsschaltung (30 - 3n), die zum Anstellen eines Vergleichs zwischen den mit den Testmustern kombinierten Datenfragmenten konfiguriert ist,
**dadurch gekennzeichnet,**
**dass** die Logikschaltung ferner ein Synchronisierungsmittel umfasst,
wobei das Synchronisierungsmittel ein Element (214) umfasst, das ausgelegt ist, Dateninkrementsignale (214A, 214B) jeweils von jedem aus der Vielzahl von Funktionsblöcken (110, 111) zu empfangen, und dann ein Signal (214Y) auszugeben, um die Zeitsteuerung zum Ausgeben der nächstfolgenden Daten durch die Vielzahl von Funktionsblöcken (110, 111) zu synchronisieren;
wobei das Synchronisierungsmittel ferner ein weiteres Element (211) und einen Zähler (212) umfasst, wobei das weitere Element (211) ausgestaltet ist, jeweils orthogonale Wellenforminkrementsignale (211A, 211B) von der Vielzahl von Funktionsblöcken (110, 111) zu empfangen, und dann ein Signal (211Y) auszugeben, das den Zähler (212) zum Erzeugen eines Arguments x erhöht, wodurch der Zähler (212) an die Vielzahl von Testmustererzeugungsschaltungen (100, 101) abwechselnd ein Argument x, das den Zustand anzeigt, dass ein Testmuster mit den von den Funktionsblöcken (110, 111) ausgegebenen Datenfragmenten zu kombinieren ist, und ein Argument x, das den Zustand anzeigt, dass ein Testmuster nicht mit den von den Funktionsblöcken (110, 111) ausgegebenen Datenfragmenten zu kombinieren ist, ausgibt.

2. Logikschaltung gemäß Anspruch 1,
wobei Taktsignale aus unterschiedlichen Taktquellen (CLK1, CLK2) jeweils jedem Funktionsblock (110, 111) und der entsprechenden Testmustererzeugungsschaltung (100, 101) bereitgestellt werden.

3. Logikschaltung gemäß Anspruch 2,
wobei die unterschiedlichen Taktquellen (CLK1, CLK2) unterschiedliche Schwingungsschaltungen sind.

4. Logikschaltung gemäß Anspruch 2,
wobei die unterschiedlichen Taktquellen (CLK1, CLK2) unterschiedliche Taktmultiplizierschaltungen sind.

5. Logikschaltung gemäß einem der vorangegangenen Ansprüche,
wobei jeder aus der Vielzahl von Funktionsblöcken (110, 111) jeweils aus einem Mikroprozessor besteht.

6. Logikschaltung gemäß einem der vorangegangenen Ansprüche,
wobei die Testmuster orthogonale Wellenformen sind.

7. Logikschaltung gemäß einem der vorangegangenen Ansprüche,
wobei Regionen, die jeden Funktionsblock (110, 111) und die entsprechende Testmustererzeugungsschaltung (100, 101) umfassen, von einer Region, welche die Vergleichsschaltung (30 - 3n) umfasst, beabstandet angeordnet sind.

8. Logikschaltung gemäß einem der vorangegangenen Ansprüche,
wobei Regionen, die jeden Funktionsblock (110, 111) und die entsprechende Testmustererzeugungsschaltung (100, 101) umfassen, auf einem Halbleiterchip ausgebildet sind, der sich von einem Halbleiterchip, auf dem eine Region, welche die Vergleichsschaltung (30 - 3n) umfasst, ausgebildet ist, unterscheidet.

9. Steuerungsvorrichtung, umfassend:
eine Logikschaltung gemäß einem der Ansprüche 1 bis 8;
einen Verstärker (7), der ein Hochpassfilter oder Hochpass-Charakteristika aufweist;
eine Gleichrichterschaltung (8); und
ein Relais (9),
wobei ein Ausgangssignal der Vergleichsschaltung (30 - 3n) in den Verstärker (7) eingegeben wird,
wobei das Relais (9) durch Verwendung eines Ausgangssignals aktiviert wird, das durch Gleichrichten eines Ausgangssignals des Verstärkers (7) durch Verwendung der Gleichrichterschaltung (8) erhalten wird, und
wobei durch Verwenden des Relais (9) ein Ausgang der Funktionsblöcke (110, 111) mit einer zu steuernden, externen Vorrichtung verbunden oder von dieser getrennt ist.

## Revendications

1. Circuit logique comprenant :
une pluralité de blocs de fonction (110, 111) formant un système redondant et configurés pour délivrer en sortie des éléments de données, chaque élément de données comprenant une chaîne de bits ;
une pluralité de circuits de génération de motif de test (100, 101) configurés pour combiner des motifs de test pour une détection d'anomalie avec les éléments de données délivrés en sortie à partir des blocs de fonction 10 (110, 111) ; et
un circuit de comparaison (30 - 3n) configuré pour effectuer une comparaison entre les éléments de données combinés avec les motifs de test,
**caractérisé en ce que** :
le circuit logique comprend en outre des moyens de synchronisation, dans lequel :
les moyens de synchronisation comprennent un élément (214) conçu pour recevoir des signaux d'incrément de données (214A, 214B) de chacun de la pluralité de blocs de fonction (110, 111), respectivement, puis pour délivrer en sortie un signal (214Y) afin de synchroniser la synchronisation pour délivrer en sortie les données suivantes par la pluralité de blocs de fonction (110, 111) ;
les moyens de synchronisation comprennent en outre un élément supplémentaire (211) et un compteur (212), dans lequel l'élément supplémentaire (211) est conçu pour recevoir des signaux d'incrémentation de forme d'onde orthogonale (211A, 211B) provenant de la pluralité de blocs de fonction (110, 111), respectivement, et pour ensuite délivrer en sortie un signal (211Y) qui incrémente le compteur (212) pour générer un argument, de sorte que le compteur (212) délivre en sortie alternativement à la pluralité de circuits de génération de motif de test (100, 101) un argument indiquant l'état où un motif de test doit être combiné avec les éléments de données délivrés en sortie à partir des blocs de fonction (110, 111) et un argument indiquant l'état où un motif de test ne doit pas être combiné avec les éléments de données délivrés en sortie à partir des blocs de fonction (110, 111).

2. Circuit logique selon la revendication 1,
dans lequel des signaux d'horloge provenant de différentes sources d'horloge (CLK1, CLK2) sont fournis à chaque bloc de fonction (110, 111) et au circuit de génération de motif de test correspondant (100, 101), respectivement.

3. Circuit logique selon la revendication 2,
dans lequel les différentes sources d'horloge (CLK1, CLK2) sont des circuits d'oscillation différents.

4. Circuit logique selon la revendication 2,
dans lequel les différentes sources d'horloge (CLK1, CLK2) sont des circuits multiplicateurs d'horloge différents.

5. Circuit logique selon l'une quelconque des revendications précédentes,
dans lequel chacun de ladite pluralité de blocs de fonction (110, 111) est composé d'un microprocesseur, respectivement.

6. Circuit logique selon l'une quelconque des revendications précédentes,
dans lequel les motifs de test sont des formes d'onde orthogonales.

7. Circuit logique selon l'une quelconque des revendications précédentes,
dans lequel des régions comprenant chaque bloc de fonction (110, 111) et le circuit de génération de motif de test correspondant (100, 101) sont espacées d'une région comprenant le circuit de comparaison (30 - 3n).

8. Circuit logique selon l'une quelconque des revendications précédentes,
dans lequel des régions comprenant chaque bloc de fonction (110, 111) et le circuit de génération de motif de test correspondant (100, 101) sont formées sur une puce à semi-conducteur différente à partir d'une puce à semi-conducteur sur laquelle une région comprenant le circuit de comparaison (30-3n) est formée.

9. Appareil de commande comprenant :
un circuit logique selon l'une quelconque des revendications 1 à 8 ;
un amplificateur (7) ayant un filtre passe-haut ou des caractéristiques passe-haut ;
un circuit redresseur (8) ; et
un relais (9),
dans lequel une sortie du circuit de comparaison (30 - 3n) est entrée dans l'amplificateur (7),
dans lequel le relais (9) est activé en utilisant une sortie obtenue en redressant une sortie de l'amplificateur (7) en utilisant le circuit redresseur (8), et
dans lequel, en utilisant le relais (9), une sortie des blocs de fonction (110, 111) est connectée à ou déconnectée d'un appareil externe devant être commandé.
